(19) Europäisches Patentamt / European Patent Office / Office européen des brevets

(11) **EP 2 765 122 A1**

(12) **EUROPEAN PATENT APPLICATION**
published in accordance with Art. 153(4) EPC

(43) Date of publication:
**13.08.2014 Bulletin 2014/33**

(51) Int Cl.:
**C04B 35/468** *(2006.01)*    **H01C 7/02** *(2006.01)*

(21) Application number: **12838861.8**

(86) International application number:
**PCT/JP2012/075235**

(22) Date of filing: **28.09.2012**

(87) International publication number:
**WO 2013/051486 (11.04.2013 Gazette 2013/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.10.2011 JP 2011219093**

(71) Applicant: **Hitachi Metals, Ltd.**
**Tokyo 105-8614 (JP)**

(72) Inventors:
• **INO Kentaro**
**Mishima-gun**
**Osaka 618-0013 (JP)**
• **SHIMADA Takeshi**
**Mishima-gun**
**Osaka 618-0013 (JP)**
• **UEDA Itaru**
**Mishima-gun**
**Osaka 618-0013 (JP)**
• **KIDA Toshiki**
**Tottori-shi**
**Tottori 689-1121 (JP)**

(74) Representative: **Zimmermann & Partner**
**Josephspitalstr. 15**
**80331 München (DE)**

(54) **SEMICONDUCTOR PORCELAIN COMPOSITION, POSITIVE TEMPERATURE COEFFICIENT ELEMENT, AND HEAT-GENERATING MODULE**

(57)    The present invention provides a semiconductor ceramic composition which is represented by a composition formula of $[(Bi\text{-}A)_x(Ba_{1-y}R_y)_{1-x}](Ti_{1-z}M_z)_aO_3$ (in which A is at least one kind of Na, Li and K, R is at least one kind of rare earth elements (including Y), and M is at least one kind of Nb, Ta and Sb), in which a, x, y and z satisfy $0.90 \leq a \leq 1.10$, $0 < x \leq 0.30$, $0 \leq y \leq 0.050$ and $0 \leq z \leq 0.010$ and an average distance between voids, which is an average value of a space between voids being internally present, is 1.0 $\mu$m or more and 8.0 $\mu$m or less.

Fig. 1

**Description**

TECHNICAL FIELD

The present invention relates to a semiconductor ceramic composition having a positive temperature coefficient of resistivity, which is used for a PTC thermistor, a PTC heater, a PTC switch, a temperature detector and the like, as well as a PTC element and a heat generating module.

BACKGROUND ART

Conventionally, as materials showing a PTCR characteristic (Positive Temperature Coefficient of Resistivity), there have been proposed semiconductor ceramic compositions in which various semiconductive elements are added to $BaTiO_3$. The PTCR characteristic is a characteristic that a resistance value sharply increases at a high temperature of the Curie point or higher. Semiconductor ceramic compositions having the PTCR characteristic are used for a PTC thermistor, a PTC heater, a PTC switch, a temperature detector and the like.

The PTCR characteristic can be evaluated by a temperature coefficient of resistivity. The temperature coefficient of resistivity is considered to be caused due to an increase in resistance formed at a crystal grain boundary (resistance by schottky barrier). The PTCR characteristic can be evaluated by a temperature coefficient of resistivity and PTC materials are required to have a high temperature coefficient of resistivity.

Moreover, the Curie temperature of a general $BaTiO_3$-based semiconductor ceramic composition is around 120°C. Since a semiconductor ceramic composition having high Curie temperature is demanded, the Curie temperature is regulated using an additive element such as Sr or Pb depending on the uses. Lead material such as $PbTiO_3$ is known as an additive element that can increase the Curie temperature. However, lead is an element causing environmental pollution, and in recent years, a semiconductor ceramic element that does not use lead material is demanded.

To solve the problems of the conventional $BaTiO_3$-based semiconductor ceramic composition, Patent Document 1 proposes a $BaTiO_3$-based semiconductor ceramic composition comprising the composition in which a portion of Ba as a main component is substituted by Bi or Na. The semiconductor ceramic composition described in those patent documents can increase the Curie temperature without using lead, and has large temperature coefficient of resistivity.

Also, Patent Document 2 describes a PTC element having a plurality of electrodes and a $BaTiO_3$-based semiconductor ceramic composition arranged in between the electrodes, in which the PTC element exhibits the PTCR characteristic by resistance components near the interface between the semiconductor ceramic composition and the electrodes.

Patent Document 3 describes a lamination type semiconductor ceramic element having positive resistance temperature characteristic, comprising a semiconductor ceramic layer and an electrode that are alternately laminated, in which a porosity of the semiconductor ceramic element is from 3 to 15 vol%. Patent Document 3 further describes that since oxidation proceeds up to inside the composition by conducting reoxidation heat treatment after sintering in reducing atmosphere, resistance change increases.

BACKGROUND ART DOCUMENT

PATENT DOCUMENT

Patent Document 1: WO2006/118274
Patent Document 2: WO2011/126040
Patent Document 3: JP-A-H6-302403

SUMMARY OF THE INVENTION

PROBLEMS THAT THE INVENTION IS TO SOLVE

A semiconductor ceramic composition is used as a PTC element in the state that an electrode is formed on the surface thereof.

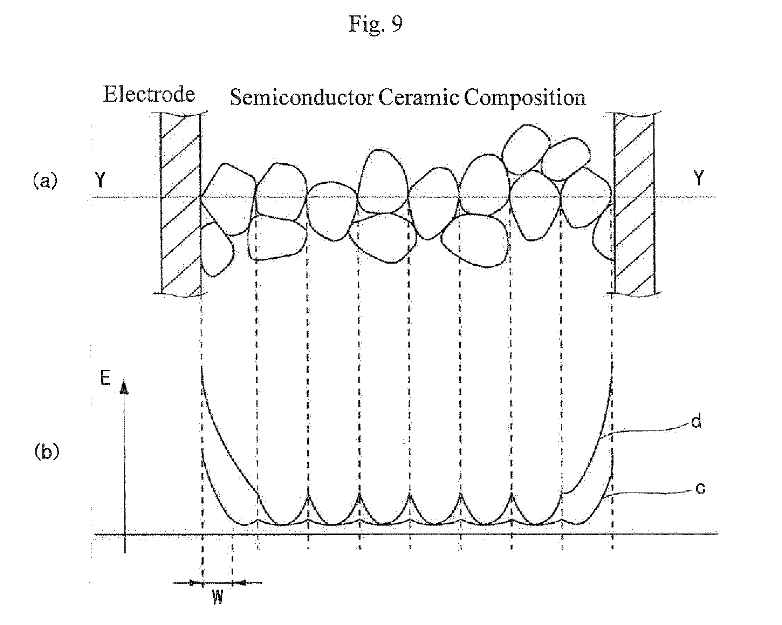

The semiconductor ceramic composition described in Patent Document 2 has large temperature coefficient of resistivity only around the interface due to schottky barrier at the interface between an electrode formed on the surface thereof and the semiconductor ceramic composition, as shown in Fig. 9. Patent Document 2 further describes that the inside of the composition apart from the electrode does not have large temperature coefficient of resistivity. Fig. 9 (a) is a schematic view showing the state that a semiconductor ceramic compositions comprising a plurality of crystal grains is sandwiched between a pair of electrodes, and Fig. 9 (b) is a schematic view showing energy potential on a straight line Y-Y in Fig. 9 (a). In Fig. 9 (b), curve c shows energy potential at room temperature, and curve d shows energy potential at 200°C. A site having higher energy potential has higher temperature coefficient of resistivity.

That is, the semiconductor ceramic composition described in Patent Document 2 is that since only the temperature coefficient of resistivity near the electrode formed on the surface of the semiconductor ceramic composition plays PTCR characteristic of the entire semiconductor ceramic composition, when the temperature coefficient of resistivity near the electrode changes by adhesiveness to the electrode formed on the surface, the PTCR characteristic of the entire semiconductor ceramic composition changes with the change. Since the semiconductor ceramic composition has high temperature coefficient of resistivity regardless of the thickness thereof, the semiconductor ceramic composition is effective in a lamination type PTC element having short distance between electrodes. However, in the case of using a semiconductor ceramic composition for a PTC element in which a distance between electrodes is 100 $\mu$m or more, variation in characteristics occurs unless adhesion between the electrode and the semiconductor ceramic composition in each PTC element makes constant. For this reason, in the case where PTC elements are mass-produced using the semiconductor ceramic composition, there is a concern that reliability of a product is impaired.

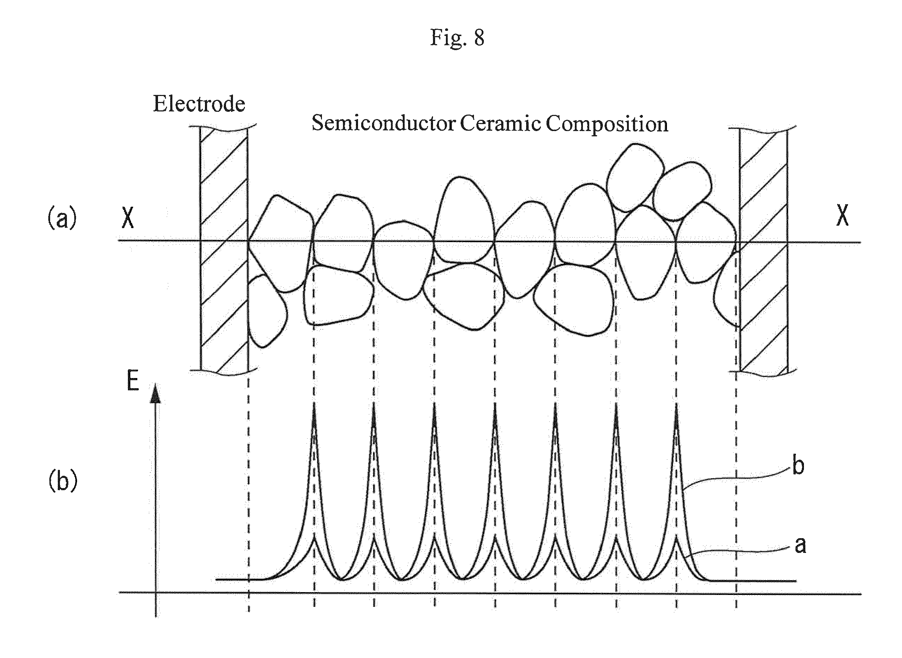

To inhibit the variation in characteristics, it is preferred to make the semiconductor ceramic composition have large temperature coefficient of resistivity not only near the electrodes but inside the semiconductor ceramic composition, as shown in Fig. 8. Fig. 8 (a) is a schematic view showing the state that the semiconductor ceramic composition comprising a plurality of crystal grains is sandwiched between a pair of electrodes, and Fig. 8 (b) is a schematic view showing energy potential of a straight line X-X in Fig. 8 (a). In Fig. 8 (b), curve a shows energy potential at room temperature, and curve b shows energy potential at 200°C. Differing from the semiconductor ceramic composition of Fig. 9, the semiconductor ceramic composition of Fig. 8 has high energy potential inside the composition, not at the interface between the electrode and the composition.

Moreover, it is revealed from the research results by the present inventors that the $BaTiO_3$-based semiconductor ceramic composition comprising the composition in which a portion of Ba is substituted by Bi or Na, as disclosed in Patent Document 2 does not increase a temperature coefficient of resistivity even though the reoxidation heat treatment as described in Patent Document 3 is conducted. For this reason, a composition having high energy potential inside the composition cannot be obtained by only reoxidation heat treatment.

The present invention provides a semiconductor ceramic composition in which an internal temperature coefficient of resistivity $\alpha$in is as high as 4%/°C or more in a perovskite type semiconductor ceramic composition, a PTC element using the semiconductor ceramic composition, and a heat generating module.

## MEANS FOR SOLVING THE PROBLEMS

A first invention of the present invention is a semiconductor ceramic composition which is represented by a composition formula of $[(Bi-A)_x(Ba_{1-y}R_y)_{1-x}](Ti_{1-z}M_z)_aO_3$ (wherein A is at least one kind of Na, Li and K, R is at least one kind of rare earth elements (including Y), and M is at least one kind of Nb, Ta and Sb), wherein a, x, y and z satisfy $0.90{\leq}a{\leq}1.10$, $0<x{\leq}0.30$, $0{\leq}y{\leq}0.050$ and $0{\leq}z{\leq}0.010$ and an average distance between voids, which is an average value of a space between voids being internally present, is 1.0 $\mu$m or more and 8.0 $\mu$m or less.

A second invention of the present invention is the semiconductor ceramic composition according to the first invention of the present invention, wherein R contains Y and at least one kind of rare earth elements other than Y, and which satisfies $0.010{\leq}y{\leq}0.050$.

A third invention of the present invention is a PTC element comprising the semiconductor ceramic composition according to the first invention or the second invention of the present invention and provided thereon at least a pair of electrodes.

A fourth invention of the present invention is a heat generating module comprising the PTC element according to the third invention of the present invention.

## ADVANTAGE OF THE INVENTION

According to the present invention, the semiconductor ceramic composition having the internal temperature coefficient of resistivity $\alpha$in as high as 4%/°C or more in the perovskite type semiconductor ceramic composition can be provided. Even in the case of preparing a PTC element having a thickness between electrodes of 100 $\mu$m or more using the semiconductor ceramic composition, variation in adhesion between the electrode and the semiconductor ceramic composition does not occur, and the PTC element having high reliability and the heat generating module using the same can be obtained.

BRIEF DESCRIPTION OF THE DRAWINGS

Fig. 1 is a view showing the relationship between an average distance between voids and an internal temperature coefficient of resistivity.

Fig. 2 is a view showing the relationship between a density of a sintered body and an internal temperature coefficient of resistivity thereof.

Fig. 3 is a structure observation photograph of the semiconductor ceramic composition of the present embodiment.

Fig. 4 is a schematic view for explaining the measuring means of an average distance between voids.

Fig. 5 is a graph for explaining the measuring means of a temperature coefficient of resistivity $\alpha$in.

Fig. 6 is other graph for explaining the measuring means of a temperature coefficient of resistivity $\alpha$in.

Fig. 7 is a schematic view of a heat generating module using the PTC element according to one embodiment of the present invention.

Fig. 8 is a schematic view for explaining the difference in energy potential by a site in the semiconductor ceramic composition of the present invention.

Fig. 9 is a schematic view for explaining the difference in energy potential by a site in the conventional semiconductor ceramic composition.

MODE FOR CARRYING OUT THE INVENTION

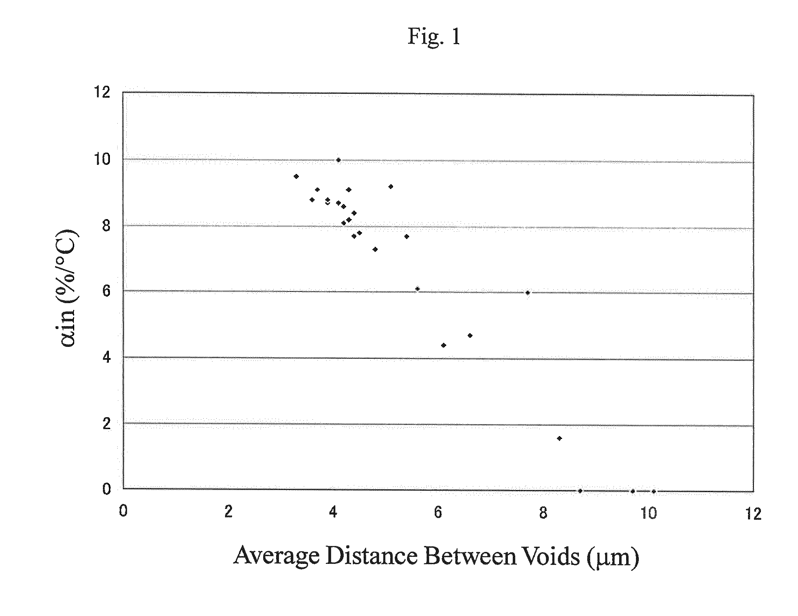

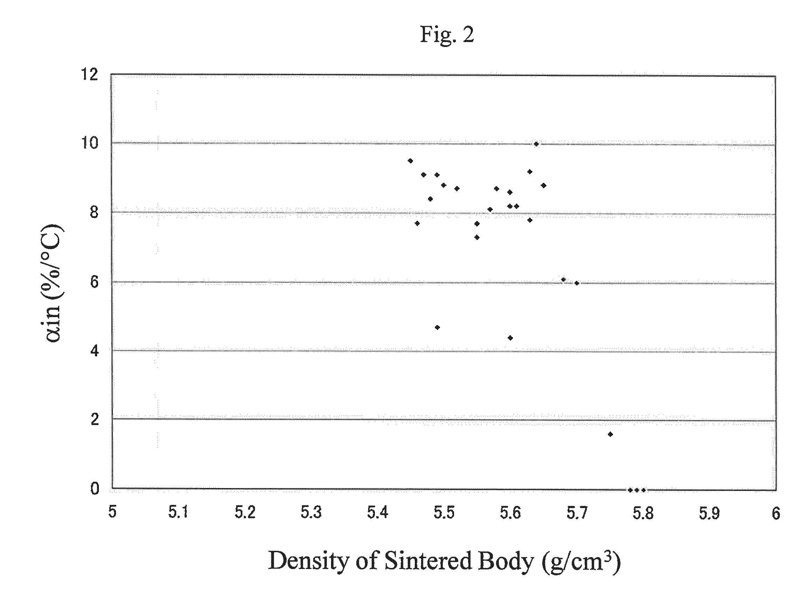

The PTC element using the semiconductor ceramic composition of the present invention is provided with large temperature coefficient of resistivity not only in the site near the electrode but even in the inside of the semiconductor ceramic composition. As the condition for exhibiting this characteristic, the present inventors have first thought that internal voids (hereinafter referred to as "voids") are greatly concerned and have focused on a density of a sintered body of the composition. However, as shown in Fig. 2, there was no correlation between the density and the temperature coefficient of resistivity $\alpha$in. Then, they have focused on an average value of distance between voids which are present inside (hereinafter referred to as an "average distance between voids"). As a result, high correlation was seen between the average distance between voids and the temperature coefficient of resistivity $\alpha$in as shown in Fig. 1. It has been found from this fact that high temperature coefficient of resistivity $\alpha$in is obtained by setting the average distance between voids so as to fall within a predetermined range, and this has led to the present invention.

A semiconductor ceramic composition having larger internal temperature coefficient of resistivity is obtained as the average value of distance between voids which are internally present (hereinafter referred to as an "average distance between voids") is shorter. The average distance between voids is 8.0 $\mu$m or less, preferably 7.0 $\mu$m or les, and still more preferably 5.0 $\mu$m or less. Measurement method of the average distance between voids and measurement method of the internal temperature coefficient of resistivity ($\alpha$in) are described hereinafter.

On the other hand, in the case where the average distance between voids is too short, mechanical strength of the semiconductor ceramic composition is likely to decrease. For this reason, the lower limit of the average distance between voids is preferably 1.0 $\mu$m or more, more preferably 2.0 $\mu$m or more, and still more preferably 3.0 $\mu$m or more.

It is presumed that the voids are formed by that a gap between raw material powders remains even after sintering, or is formed by evaporation of Bi by sintering.

By such a constitution, a semiconductor ceramic composition having the internal coefficient of resistivity $\alpha$in of 4%/°C or more can be provided.

The semiconductor ceramic composition of the present invention has a composition which does not contain lead. The composition which does not contain lead means a composition produced without intentionally adding lead thereto, and, for example, a composition unavoidably containing lead is allowable.

The composition of a material in the semiconductor ceramic composition of the present invention is described.

The semiconductor ceramic composition of the present invention which is represented by a composition formula of $[(Bi\text{-}A)_x(Ba_{1-y}R_y)_{1-x}](Ti_{1-z}M_z)_aO_3$ (wherein A is at least one kind of Na, Li and K, R is at least one kind of rare earth elements (including Y), and M is at least one kind of Nb, Ta and Sb).

In the $ABO_3$ type semiconductor ceramic composition of the present invention, a is a value showing an allowable range of a molar ratio between a site comprising elements Bi and A and elements Ba and R (hereinafter referred to as "Ba site") and a site comprising elements Ti and M (hereinafter referred to as "Ti site"). In the case where a is less than 0.90, a semiconductor ceramic composition densely sintered is not obtained, and breakage is prone to occur. In the case where a exceeds 1.10, a Ti-rich phase is prone to be formed as a different phase. As a result, a part of the Ti-rich phase melts during sintering, and consequently, the yield is deteriorated and a semiconductor ceramic composition having a desired shape is not obtained.

The added amount x of elements Bi and A is more than 0 and 0.30 or less. In the case where x is more than 0, the Curie temperature can be increased to 130°C or higher. In the case where x is more than 0.30, the elements Bi and A are prone to evaporate during sintering, and as a result, mol number of elements in the Ba site is decreased as compared with the Ti site. As a result, the semiconductor ceramic composition becomes Ti-rich, and the Ti-rich phase precipitates as a different phase. A part of the Ti-rich phase melts during sintering, and this deteriorates the yield and makes it difficult to obtain a semiconductor ceramic composition having a desired shape.

The range of the added amount y of the rare earth element is 0 or more and 0.050 or less. In the case where y is more than 0.050, the temperature necessary for sintering increases, and there is a possibility that the temperature exceeds heat resistance of a sintering furnace. The case is not preferred on production. The range of the amount z of the element M is 0 or more and 0.010 or less. In the case where z is more than 0.010, mechanical strength of the semiconductor ceramic composition decreases, and breakage is prone to occur when the composition has been formed into a PTC element. The case is not preferred on production. At least one of the added amount y of the rare earth element and the added amount z of the element M is essential, that is, it is preferred to satisfy $y+z>0$. This can increase the internal temperature coefficient of resistivity $\alpha$in.

The semiconductor ceramic composition of the present invention and one example of a method for producing the semiconductor ceramic composition are explained below.

The semiconductor ceramic composition is obtained as followed. A calcined powder comprising a composition of $(BaR)TiMO_3$ (hereinafter referred to as $\alpha$ calcined powder) and a calcined powder comprising a composition of $(Bi\text{-}Na)TiO_3$ (hereinafter referred to as $\beta$ calcined powder) were separately prepared so as to make up a composition represented by the compositional formula $[(Bi\cdot A)_x(Ba_{1-y}R_y)_{1-x}][Ti_{1-z}M_z]_aO_3$, and then mixed. Thereafter, a formed body is produced using a mixed calcined powder obtained by appropriately mixing the $\alpha$ calcined powder and the $\beta$ calcined powder, and is then sintered. Thus, the production method where the $\alpha$ calcined powder and the $\beta$ calcined powder are separately prepared, and the mixed calcined powder obtained by mixing those is formed and sintered (hereinafter referred to as a separate calcination method) is preferably adopted. The Ti raw material for making up a Ti-rich composition may be added before preparing the calcined power and may be added to the calcined powder. $TiO_2$ can be used as the Ti raw material.

Si raw material can be added to the above composition. Si amount of the Si raw material can be added in a range of 0.3 mol% or more and 8 mol% or less based on the above composition. The average distance between voids can be regulated by the added amount of Si.

The $\alpha$ calcined powder and the $\beta$ calcined powder are obtained by calcining the respective raw material powders at appropriate temperatures according to the powders. For example, $TiO_2$, $Bi_2O_3$ and $Na_2CO_3$ are generally use as the raw material powders of the $\beta$ calcined powder. However, $Bi_2O_3$ has the lowest melting point in those raw material powders, and evaporation is more prone to occur by sintering. Therefore, the calcination is conducted at relatively low temperature of from 700 to 950°C such that Bi does not evaporate as possible and additionally hyperreaction of Na does not cause. After the $\beta$ calcined powder has once been formed, the melting point of the $\beta$ calcined powder itself becomes stable at high value. Therefore, even though the $\beta$ calcined powder is mixed with $\alpha$ calcined powder, the mixed powder can be sintered at higher temperature. Thus, according to the separate calcination method, evaporation of Bi and hyperreaction of Na are suppressed, and the $\beta$ calcined powder having small deviation in composition of Bi-Na to the weighed value is obtained.

Adoption of the separate calcination method is not essential, but by adopting the separate calcination method, a PTC material in which resistivity at room temperature is low and deviation of the Curie temperature is suppressed is obtained. The ratio of Bi and Na is basically 1:1, but fluctuation may be caused in the ratio between Bi and Na. For example, the Bi/Na ratio is 1:1 when blending, but after Bi evaporated in calcination, followed by sintering, the ratio may not be 1:1.

By further conducting heat treatment after mixing the $\alpha$ calcined powder and the $\beta$ calcined powder, dissolution of the composition of $\alpha$ calcined powder and the composition of $\beta$ calcined power to each other can be accelerated. Variation in composition in the inside of the semiconductor ceramic composition can be reduced by the heat treatment. Specifically, it is desirable that a mixture of the $\alpha$ calcined powder and the $\beta$ calcined power is heat-treated within a temperature range of from 1,000 to 1,200°C.

It is preferable that the semiconductor ceramic composition of the present invention contains, as the rare earth element R, Y as an essential element, and contains at least one kind of rare earth elements other than Y, and satisfies $0.010 \leq y \leq 0.050$. This can suppress the change with time by electrification. The rare earth element R is introduced to dope a carrier, but it is known that when the rare earth element R precipitates at the grain boundary, the rare earth element R has the effect to make difficult to cause the change with time by electrification. Y is relatively difficult to enter crystal grains, but by adding Y together with other rare earth elements, Y compound becomes easy to precipitate at the grain boundary, and the change with time can be suppressed. To obtain the effect of suppressing the change with time and the effect of achieving high temperature coefficient of resistivity, it is further preferable that the composition contains Y and at least one kind of rare earth elements other than Y. The lower limit of y is preferably 0.015 or more, and more preferably 0.020 or more. The upper limit of y is preferably 0.045 or less.

Furthermore, in the case of considering only the added amount of Y, it is preferable that Y occupies 0.010<y<0.045 in the range of y.

As a method for adding the Y, it is desirable that (BaR)TiMO$_3$-based calcined powder ($\alpha$ calcined powder) is produced using at least one kind of rare earth elements R other than Y as a raw material, and Y raw material and the (Bi-Na)TiO$_3$-based calcined powder ($\beta$ calcined powder) are then mixed. In the case where, the $\alpha$ calcined powder having rare earth elements other than Y added thereto is obtained and Y raw material is then added, Y is further prone to precipitate at the grain boundary. By this, the effect of suppressing the change with time can be enhanced.

PVA is added to and mixed with a pulverized powder of the calcined powder in an amount of 10 mass%, and the mixture can be granulated by a granulating apparatus. The forming can be conducted with a single screw press apparatus. The formed body is subjected to binder removal at a temperature of from 400 to 700°C, and then sintered under predetermined sintering conditions, thereby a semiconductor ceramic composition is obtained. The semiconductor ceramic composition obtained is cut to obtain a PTC element having a desired shape. A method for forming an electrode includes baking, sputtering, thermal spraying and plating of an electrode paste, but is not particularly limited.

The PTC element of the present invention is that an electrode is formed on the semiconductor ceramic composition. The formation of the electrode is generally conducted in an air atmosphere, but can be conducted in an inert gas atmosphere. The formation of the electrode in an inert gas atmosphere can suppress oxidation at the interface and can reduce interface resistance. The inert gas can use nitrogen, argon gas and the like. To suppress oxidation, the electrode can be formed in vacuum.

The thickness of the electrode is preferably from about 5 to 30 $\mu$m in baking of a paste, from 100 to 1000 $\mu$m in sputtering, from about 10 to 100 $\mu$m in thermal spraying, and from about 5 to 30 $\mu$m in plating. Furthermore, for the purpose of preventing oxidation of a base metal (alkali metal, alkaline earth metal, aluminum, zinc and the like) electrode and improving wettability of a solder, an Ag electrode or the like can be used as an electrode (cover electrode) of a second layer. Additionally, an electrode structure of three layers or more is possible.

The semiconductor ceramic composition (hereinafter referred to as a "sintered body") of the present invention is specifically described below with reference to examples. However, it should not be construed that the present invention is limited to the examples.

The evaluation methods of the sintered body are as follows.

(Internal temperature coefficient of resistivity $\alpha$in of sintered body)

The sintered body of the present invention is characterized in that the internal temperature coefficient of resistivity $\alpha$in is high.

The temperature coefficient of resistivity $\alpha$in generally measured is the temperature coefficient of resistivity of the entire sintered body. The resistance value based on the temperature coefficient of resistivity $\alpha$in is the value of the sum of resistance near the interface formed at the interface between the electrode and the sintered body, resistance inside the sintered body apart from an interface other than the above interface and interface resistance formed at the interface between the electrode and the sintered body.

In the present invention, the internal temperature coefficient of resistivity $\alpha$in of the sintered body is determined as follows.

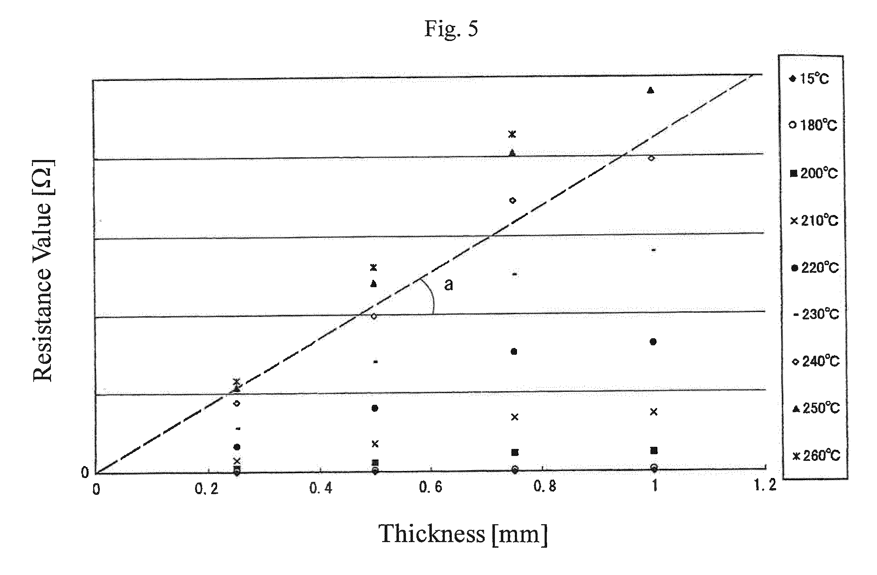

A plurality of PTC elements each having different thickness, having electrodes provided at both ends thereof is provided. Resistance value between two electrodes is measured by 4 terminal method at 5°C interval in a range of from room temperature to 260°C, and data in which a thickness (unit: mm) was plotted in a horizontal axis and resistance value was plotted in a vertical axis are obtained. Fig. 5 is a schematic view for explaining the thickness and the resistance value. In Fig. 5, values measured in a range of from 15 to 260°C (15°C, 180°C, 200°C, 210°C, 220°C, 230°C, 240°C, 250°C and 260°C) are shown.

An approximate straight line between the thickness and the resistance value is obtained from the data prepared as in Fig. 5. For example, the approximate straight line at 180°C is shown in Fig. 5. In the case where the approximate straight line is represented by R=a·$\Delta$t+R$_0$, $\Delta$t is considered to be a thickness of a sintered body, R is considered to be a resistance value of the entire sintered body, and an inclination a is considered to be a resistance value (resistivity) per 1 mm thickness in the inside of a sintered body. Incidentally, the resistance value R and the resistivity p have the relationship of R=p(d/S) (d: thickness between electrodes of sintered body, S: contact area between sintered body and electrode).

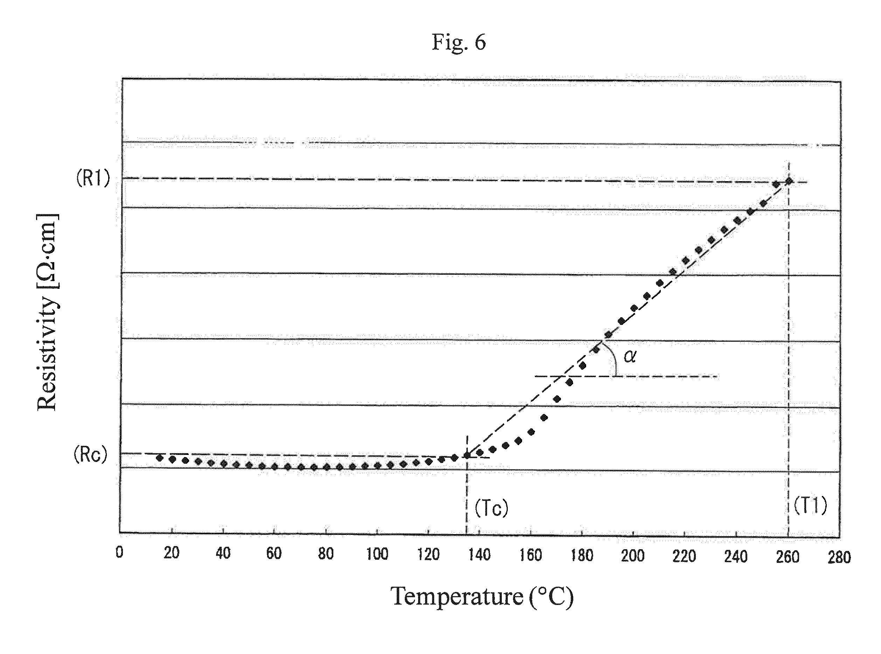

In the case where resistivity p at each temperature is plotted, the curve as shown in Fig. 6 is drawn (vertical axis of Fig. 6 is a logarithmic axis).

The temperature coefficient of resistivity $\alpha$in was calculated by the following equation.

$$\alpha in = (lnR_1 - lnR_c) \times 100 / (T_1 - T_c)$$

wherein $R_1$ is a maximum resistivity, $T_1$ is a temperature at which $R_1$ is shown, $T_c$ is the Curie temperature, $R_c$ is a resistivity at $T_c$. Here, $T_c$ was determined to be a temperature at which resistivity became double the room temperature resistivity.

In the case where a plurality of sintered bodies is not prepared, the internal temperature coefficient of resistivity $\alpha in$ can be measured by conducting the above measurement while sequentially thinning the sintered body. For example, the electrode is formed on the sintered body, and the respective resistance values are measured at the interval of 5°C in the range of from room temperature to 260°C. Thereafter, the thickness is reduced to 3/4 by cutting, and the resistance values in the range of from room temperature to 260°C are similarly measured. The internal temperature coefficient of resistivity $\alpha in$ can be measured by similarly reducing the thickness to 1/2 and 1/4 the original thickness and measuring the respective resistance values.

(Room temperature resistivity $R_{25}$)

The room temperature resistivity $R_{25}$ was measured by 4 terminal method at room temperature of 25°C.

(Average distance between voids)

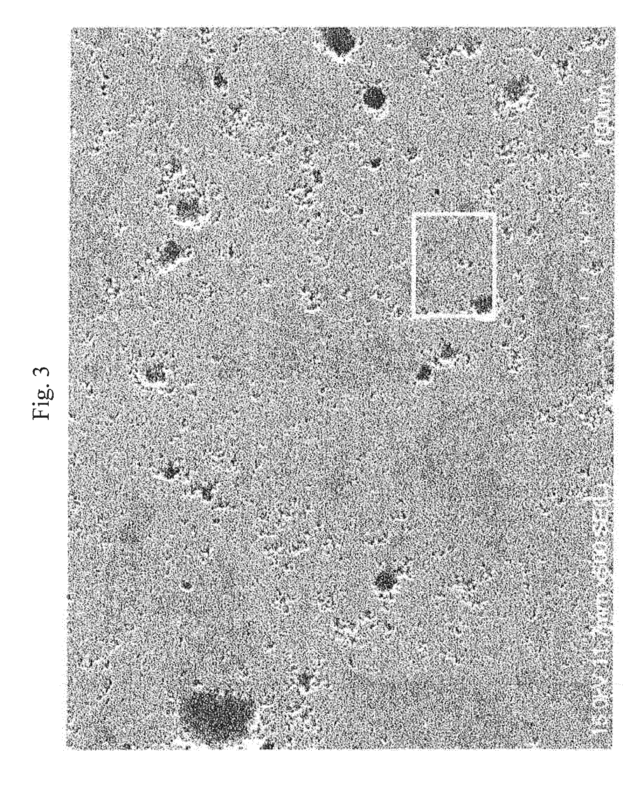

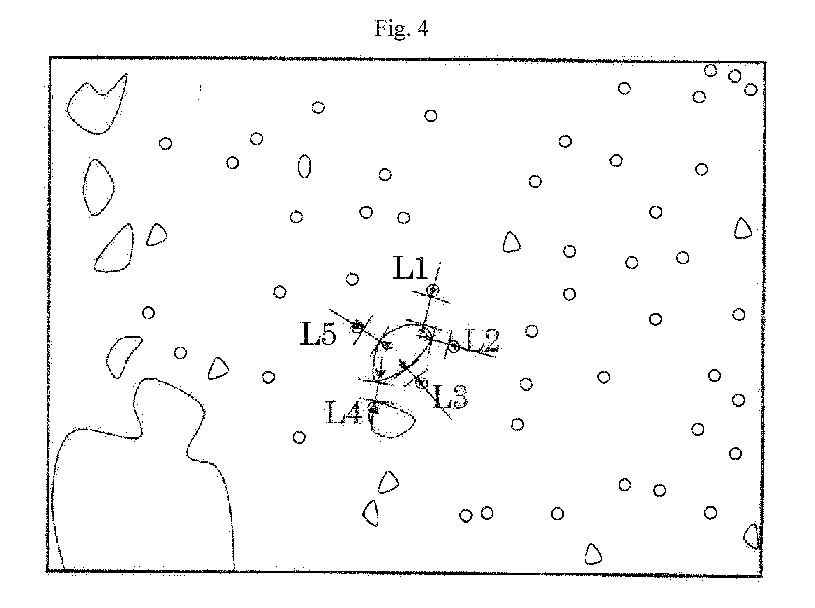

The average distance between voids was examined by SEM observation image of a sintered body. Black portions in SEM image and portions whose circumferences were surrounded with white by the edge effect were judged as voids. Fig. 4 is a schematic view in which a part of the SEM photograph of Fig. 3 was enlarged. Observation was made with 4000-power field of vision using SEM (scanning electron microscope), as shown in Fig. 4, one void (however, having a maximum diameter of 0.1 $\mu$m or more and 10 $\mu$m or less) was randomly selected in each field of vision, distances between the void and the adjacent five voids were measured, and the average values thereof was calculated. This operation was repeated 20 times, and all average values were calculated. The distance between voids was obtained by measuring the distance between the nearest edges of voids.

Incidentally, the maximum diameter means an interval at a position where a plurality of two parallel straight lines externally contacting a certain void are drawn and its interval becomes most wide.

(Example 1)

The following sintered body was obtained using the separate calcination method. Raw material powders of $BaCO_3$, $TiO_2$ and $La_2O_3$ were prepared and then blended so as to be $(Ba_{0.994}La_{0.006})TiO_3$, followed by mixing in pure water. The resulting mixed raw material powder was calcined in the air at 900°C for 4 hours to prepare an $\alpha$ calcined powder.

Raw material powders of $Na_2CO_3$, $Bi_2O_3$ and $TiO_2$ were prepared and then weighed and blended so as to be $Bi_{0.5}Na_{0.5}TiO_3$, followed by mixing in ethanol. The resulting mixed raw material powder was calcined in the air at 800°C for 2 hours to prepare a $\beta$ calcined powder.

The prepared $\alpha$ calcined powder and $\beta$ calcined powder were blended so that the molar ratio became 73/7. Mixing and pulverization were performed by a pot mill using pure water as a medium until the average particle diameter of the mixed calcined powder became from 1.0 to 2.0 $\mu$m, followed by drying. PVA was added in an amount of 10 mass% to the pulverized powder of the mixed calcined powder and, after mixing, the resulting powder was granulated by means of a granulating apparatus. The resulting granulated powder was formed on a monoaxial pressing apparatus to make a formed body. After subjected to binder removal at 700°C, the formed body is kept in a nitrogen atmosphere having an oxygen concentration of 0.01% (100 ppm) at 1,400°C for 4 hours and then gradually cooled in a furnace to obtain a sintered body having a size of 50 mm × 25 mm × 4 mm. The structure observation photograph in the inside of the sintered body is shown in Fig. 3. Black portions are voids. A plate-form reference test piece having a size of 10 mm × 10 mm × 1.00 mm was obtained from the sintered body.

Moreover, to calculate the internal temperature coefficient of resistivity $\alpha in$, plate-form test pieces having a size of 10 mm × 10 mm × 0.75 mm, 10 mm × 10 mm × 0.50 mm and 10 mm × 10 mm × 0.25 mm that correspond to 3/4, 1/2 and 1/4 of the thickness of the reference test piece, respectively were prepared. Next, an electrode paste in which mass% of Ag and Zn was 50:50 when the metal components of an electrode material was 100 mass% was prepared, and applied to both surfaces having a size of 10 mm × 10 mm of the respective test pieces by screen printing. Furthermore, an Ag paste as a cover electrode was applied to the respective electrode pastes by screen printing. The applied electrode paste and Ag paste were dried at 150°C. Thereafter, those pastes were heated in the air in a pace of 24°C/min, kept at 600°C for 10 minutes, and cooled in a pace of 24°C/min to bake those pastes. Thus, electrodes were formed. Incidentally, a glass frit and an organic binder are added to the electrode paste and the Ag paste in amounts of 3 mass% and 25 mass%, respectively, based on 100 mass% of the metal components.

With respect to the above samples, the average distance between voids, Curie temperature, room temperature resistivity and internal temperature coefficient of resistivity were measured. The results obtained are shown in Table 1.

The internal temperature coefficient of resistivity $\alpha$in is excellent in PTCR characteristic as the numerical value is higher, and the uses thereof are expanded. For example, in the case where the internal temperature coefficient of resistivity $\alpha$in is 4%/°C or more, the sintered body can be sufficiently utilized as a PTC element for use in sensors and heaters. Furthermore, the sintered body having the room temperature resistivity up to about 1,000 $\Omega$·cm can be utilized in, for example, a heat generating module for steam generation, and the sintered body having the room temperature resistivity of 1,000 $\Omega$·cm or more can be utilized in a heat generating module for a heater for hybrid cars and electric vehicles, that requires high withstand voltage. The Curie temperature necessary for use as a PTC element is from 130 to 200°C.

In the sintered body of Example 1, the average distance between voids is 3.6 $\mu$m. In the sintered body, the internal temperature coefficient of resistivity $\alpha$in is 8.8%/°C and satisfies the target characteristic value (4%/°C). Also, the room temperature resistivity $R_{25}$ is 487 $\Omega$·cm, and the Curie temperature is 163°C.

(Examples 2 to 7)

Examples 2 to 7 are examples where amounts of x and y were changed in the composition of Example 1. The production method of the sintered body, the formation method of the electrode and the evaluation method were conducted in the same method as in Example 1 except that the ratio of x and y and the sintering temperature were changed. The results obtained are shown in Table 1.

In the sintered body of Example 2, the average distance between voids is 3.3 $\mu$m; in the sintered body of Example 3, the average distance between voids is 3.7 $\mu$m; in the sintered body of Example 4, the average distance between voids is 4.3 $\mu$m; in the sintered body of Example 5, the average distance between voids is 5.4 $\mu$m; in the sintered body of Example 6, the average distance between voids is 4.1 $\mu$m; and in the sintered body of Example 7, the average distance between voids is 7.7 $\mu$m. Those average distances between voids are within the range of 1.0 $\mu$m or more and 8.0 $\mu$m or less.

Moreover, in the sintered body of Example 2, the temperature coefficient of resistivity $\alpha$in is 9.5%/°C and satisfies the target characteristic value. Furthermore, the room temperature resistivity $R_{25}$ is 754 $\Omega$·cm. In the sintered body of Example 3, the temperature coefficient of resistivity $\alpha$in is 9.1%/°C and satisfies the target characteristic value. The room temperature resistivity $R_{25}$ is 668 $\Omega$·cm. In the sintered body of Example 4, the temperature coefficient of resistivity $\alpha$in is 8.2%/°C and satisfies the target characteristic value. The room temperature resistivity $R_{25}$ is 412 $\Omega$·cm. In the sintered body of Example 5, the temperature coefficient of resistivity $\alpha$in is 5.1%/°C and satisfies the target characteristic value. The room temperature resistivity $R_{25}$ is 34 $\Omega$·cm. In the sintered body of Example 6, the temperature coefficient of resistivity $\alpha$in is 10.0%/°C and satisfies the target characteristic value. The room temperature resistivity $R_{25}$ is 970 $\Omega$·cm. In the sintered body of Example 7, the temperature coefficient of resistivity $\alpha$in is 6.0%/°C and satisfies the target characteristic value. The room temperature resistivity $R_{25}$ is 212 $\Omega$·cm.

In the case where the sintering temperature is lower than 1,320°C or higher than 1,390°C in the present examples where the molar ratio between Ba site and Ti site is 1:1, the average distance between voids falls within the above predetermined range. In the present examples where the molar ratio between Ba site and Ti site is 1:1, the preferable sintering temperature is 1,310°C or lower or 1,395°C or higher.

(Example 8)

Example 8 is an example where the amount a of Ti site in the compositional formula is 1.00>a. The sintered body was prepared as follows.

The following sintered body was obtained using a separate calcination method. Raw material powders of $Ba_2CO_3$, $TiO_2$ and $La_2O_3$ were prepared and then blended so as to be $(Ba_{0.994}La_{0.006})Ti_{0.93}O_3$, followed by mixing in pure water. The resulting mixed raw material powder was calcined in the air at 900°C for 4 hours to prepare an $\alpha$ calcined powder.

Raw material powders of $Na_2CO_3$, $Bi_2O_3$ and $TiO_2$ were prepared and then weighed and blended so as to be $Bi_{0.5}Na_{0.5}TiO_3$, followed by mixing in ethanol. The resulting mixed raw material powder was calcined in the air at 800°C for 2 hours to prepare a $\beta$ calcined powder.

The prepared $\alpha$ calcined powder and $\beta$ calcined powder were blended so that the molar ratio became 73:7. Mixing and pulverization were performed by a pot mill using pure water as a medium until the central particle diameter of the mixed calcined powder became from 1.0 to 2.0 $\mu$m, followed by drying. PVA was added in an amount of 10 mass% to the pulverized powder of the mixed calcined powder and, after mixing, resulting powder was granulated by means of a granulating apparatus. The resulting granulated powder was formed on a monoaxial pressing apparatus to make a formed body. After subjected to binder removal at 700°C, the formed body is kept in a nitrogen atmosphere having an oxygen concentration of 0.01% (100 ppm) at 1,400°C for 4 hours and then gradually cooled to obtain a sintered body having a size of 50m x 25 mm × 4 mm. The formation method of the electrode and the evaluation method were conducted in the same methods as in Example 1. The results obtained are shown in Table 1.

In the sintered body of Example 8, the average distance between voids is 2.9 $\mu$m. In the sintered body, the temperature coefficient of resistivity $\alpha$in is 8.7%/°C and satisfies the target characteristic value. Moreover, the room temperature resistivity $R_{25}$ is 824 $\Omega$·cm, and the Curie temperature is 163°C.

(Examples 9 to 11)

Examples 9 to 11 are examples where the amount a of Ti site in the compositional formula is changed to a>1.00. The sintered body was prepared as follows.

The following sintered body was obtained using a separate calcination method. Raw material powders of $BaCO_3$, $TiO_2$ and $La_2O_3$ were prepared and then blended and mixed in pure water so as to be $(Ba_{0.994}La_{0.006})Ti_{1.05}O_3$ as a material of Example 9. Those raw materials powders were blended and mixed in pure water so as to be $(Ba_{0.994}La_{0.006})Ti_{1.07}O_3$ as a material of Example 10. Those raw material powders were blended and mixed in pure water so as to be $(Ba_{0.994}La_{0.006})Ti_{1.10}O_3$ as a material of Example 11. The respective mixed raw material powders obtained were calcined in the air at 900°C for 4 hours to prepare $\alpha$ calcined powders.

As the common raw material of Examples 9 to 11, raw material powders of $Na_2O_3$, $Bi_2CO_3$ and $TiO_2$ were prepared and then weighed and blended so as to be $Bi_{0.5}Na_{0.5}TiO_3$, followed by mixing in ethanol. The mixed raw material powder obtained was calcined in the air at 800°C for 2 hours to prepare a $\beta$ calcined powder.

The prepared $\alpha$ calcined powder and $\beta$ calcined powder were blended so that the molar ratio became 73:7. Mixing and pulverization were performed by a pot mill using pure water as a medium until the central particle diameter of the mixed calcined powder became from 1.0 to 2.0 $\mu$m, followed by drying.

The subsequent production steps, the formation method of the electrode and the evaluation method were conducted in the same methods as in Example 8. The results obtained are shown in Table 1.

In the case where a is 1.05 or more which is Ti-rich composition, the average distance between voids can be decreased even though the sintering temperature is 1,380°C or lower. By lowering the sintering temperature, evaporation of elements is suppressed and a sintered body having the target composition is prone to produce.

In the sintered body of Example 9, the average distance between voids is 4.2 $\mu$m; in the sintered body of Example 10, the average distance between voids is 4.4 $\mu$m; and in the sintered body of Example 11, the average distance between voids is 4.8 $\mu$m. Those average distances between voids are within the range of 1.0 $\mu$m or more and 8.0 $\mu$m or less.

Moreover, in the sintered body of Example 9, the temperature coefficient of resistivity $\alpha$in is 8.6%/°C and satisfies the target characteristic value. The room temperature resistivity $R_{25}$ is 720 $\Omega$·cm. In the sintered body of Example 10, the temperature coefficient of resistivity $\alpha$in is 7.7%/°C and satisfies the target characteristic value. The room temperature resistivity $R_{25}$ is 800 $\Omega$·cm. In the sintered body of Example 11, the temperature coefficient of resistivity $\alpha$in is 7.3%/°C and satisfies the target characteristic value. The room temperature resistivity $R_{25}$ is 945 $\Omega$·cm.

(Reference Examples 1 to 4)

Reference Example 1 is an example where x is larger than 0.30. Reference Example 2 is an example where a is larger than 1.10. Reference Example 3 is an example where a is smaller than 0.90. Reference Example 4 is an example where y is 0.052. The production method of the sintered body, the formation method of the electrode and the evaluation method were conducted in the same methods as in Example 1, except that the ratios of x, y and a were changed. The results obtained are shown in Table 1.

In Reference Example 1 where x exceeds 0.30, a part of the sintered body melts. Therefore, a site where characteristic evaluation is possible remains, but the yield is decreased, and the case is not preferred. In Reference Example 2 where a is larger than 1.10, a dense sintered body is not obtained and is prone to break, and the case is not preferred on production. In Reference Example 3 where a is less than 0.90, a part of Ti-rich phase of the sintered body melts, and although a site where characteristic evaluation is possible remained, the sintered body having a desired form was not obtained.

Furthermore, in the sintered body of Reference Example 4 where y exceeds 0.050, the sintering density is not increased unless the sintering temperature is increased near the heat-resistant temperature of a sintering furnace, and it was difficult to adopt as the sintering conditions of mass production.

(Comparative Examples 1 to 4)

Comparative Examples 1 to 4 are examples where the amount y of rare earth element and the sintering temperature were changed in Example 9 (a=1.05). The production method of the sintered body, the formation method of the electrode and the evaluation method were conducted in the same methods as in Example 9, except that the amount y of rare earth element and the sintering temperature were changed. The results obtained are shown in Table 1.

In Comparative Example 1, the average distance between voids is 8.3 $\mu$m and exceeds the upper limit of 8.0 $\mu$m of the desired range, and the temperature coefficient of resistivity $\alpha$in is 1.6%/°C and falls below 4%/°C.

In Comparative Examples 2 to 4, the PTCR effect is not almost exhibited, and the temperature coefficient of resistivity $\alpha$in was impossible to detect.

It is seen from the results of Examples 1 to 11 and Comparative Examples 1 to 4 that unless the average distance between voids is 8.0 $\mu$m or less, the internal temperature coefficient of resistivity $\alpha$in falls below 4%/°C.

Furthermore, in the sintered body of Reference Example 1 where Bi and the amount x of element A exceed 0.30, a part of the sintered body melts, and although a site where characteristic evaluation is possible remains, the yield is poor, and the sintered body having the desired form could not be obtained. It is seen from the results of Examples 1, 5 and 6 and Reference Example 4 that when the amount y of rare earth element exceeds 0.050, the internal temperature coefficient of resistivity $\alpha$in falls below 4%/°C. The rare earth element is contained for the purpose of forming a semiconductor. However, in the case where the carrier concentration is excessively increased and exceeds 0.050, schottky barrier becomes too low, and it is considered that the internal temperature coefficient of resistivity $\alpha$in becomes small.

[Table 1]

| | x | y | a | Sintering temperature (°C) | Average distance between voids ($\mu$m) | Curie temperature (°C) | Room temperature resistivity $R_{25}$ ($\Omega\cdot$cm) | Temperature coefficient of resistivity $\alpha$ in (%/°C) |
|---|---|---|---|---|---|---|---|---|
| Example 1 | 0.09 | 0.006 | 1.00 | 1400 | 3.6 | 163 | 487 | 8.8 |
| Example 2 | 0.28 | 0.006 | 1.00 | 1400 | 3.3 | 197 | 754 | 9.5 |
| Example 3 | 0.14 | 0.006 | 1.00 | 1400 | 3.7 | 184 | 668 | 9.1 |
| Example 4 | 0.02 | 0.006 | 1.00 | 1400 | 4.3 | 133 | 412 | 8.2 |
| Example 5 | 0.09 | 0.049 | 1.00 | 1400 | 5.4 | 130 | 34 | 5.1 |
| Example 6 | 0.09 | 0.002 | 1.00 | 1400 | 4.1 | 151 | 970 | 10.0 |
| Example 7 | 0.09 | 0 | 1.00 | 1300 | 7.7 | 178 | 212 | 6.0 |
| Example 8 | 0.09 | 0.006 | 0.93 | 1400 | 2.9 | 163 | 824 | 8.7 |
| Example 9 | 0.09 | 0.006 | 1.05 | 1380 | 4.2 | 161 | 720 | 8.6 |
| Example 10 | 0.09 | 0.006 | 1.06 | 1340 | 4.4 | 164 | 800 | 7.7 |
| Example 11 | 0.09 | 0.006 | 1.09 | 1340 | 4.8 | 166 | 945 | 7.3 |
| Reference Example 1 | 0.31 | 0.006 | 1.000 | 1400 | 3.9 | 201 | 1024 | 8.8 |
| Reference Example 2 | 0.09 | 0.006 | 1.11 | 1400 | 5.1 | 158 | 1157 | 9.2 |
| Reference Example 3 | 0.09 | 0.006 | 0.89 | 1400 | 1.7 | 160 | 1361 | 8.9 |
| Reference Example 4 | 0.09 | 0.052 | 1.000 | 1400 | 6.2 | 180 | 21 | 4.4 |
| Comparative Example 1 | 0.09 | 0.006 | 1.05 | 1340 | 8.3 | 164 | 24 | 1.6 |
| Comparative Example 2 | 0.09 | 0.006 | 1.05 | 1320 | 8.5 | - | 22 | - (Impossible to detect) |
| Comparative Example 3 | 0.09 | 0.029 | 1.05 | 1360 | 9.7 | - | 21 | - (Impossible to detect) |

| | x | y | a | Sintering temperature (°C) | Average distance between voids ($\mu$m) | Curie temperature (°C) | Room temperature resistivity $R_{25}$ ($\Omega \cdot$cm) | Temperature coefficient of resistivity $\alpha$ in (%/°C) |
|---|---|---|---|---|---|---|---|---|
| Comparative Example 4 | 0.09 | 0.029 | 1.05 | 1340 | 10.1 | - | 17 | - (Impossible to detect) |

(Example 12)

Example 12 is an example where rare earth element is not used as a semiconductor-forming element (y=0) and a part of Ti site was substituted by Ta. A sintered body was obtained as follows using a separate calcination method.

Raw material powders of $BaCO_3$, $TiO_2$ and $Ta_2O_5$ were prepared and then blended so as to be $Ba(Ti_{0.991}Ta_{0.009})O_3$, followed by mixing in pure water. The resulting mixed raw material powder was calcined in the air at 900°C for 4 hours to prepare an $\alpha$ calcined powder.

The preparation of a $\beta$ calcined powder was conducted in the same manner as in Example 1. The subsequent mixing of the $\alpha$ calcined powder and the $\beta$ calcined powder, forming, sintering, electrode formation and evaluation were conducted in the same method as in Example 1 to obtain a PTC element. The results obtained are shown in Table 2.

In the sintered body of Example 12, the average distance between voids is 4.5 $\mu$m. The temperature coefficient of resistivity $\alpha$ of the sintered body is 7.8%/°C and satisfies the target characteristic value. Furthermore, the room temperature resistivity $R_{25}$ is 867 $\Omega$·cm.

(Examples 13 and 14)

Examples 13 and 14 are examples where similar to Example 12, rare earth element is not used (y=0) and a part of Ti site was substituted by Ta, and are examples where the amount of Ta was changed. Other than this, the production method of the sintered body, the electrode formation method and the evaluation method were conducted in the same methods as in Example 1. The results obtained are shown in Table 2.

In the sintered body of Example 13, the average distance between voids is 4.2 $\mu$m, and in the sintered body of Example 14, the average distance between voids is 4.3 $\mu$m. Those average distances between voids are within the range of 1.0 $\mu$m or more and 8.0 $\mu$m or less.

Furthermore, in the sintered body of Example 13, the temperature coefficient of resistivity $\alpha$in is 8.1%/°C and satisfies the target characteristic value. The room temperature resistivity $R_{25}$ is 455 $\Omega$·cm. In the sintered body of Example 14, the temperature coefficient of resistivity $\alpha$in is 9.1%/°C and satisfies the target characteristic value. The room temperature resistivity $R_{25}$ is 668 $\Omega$·cm.

(Reference Examples 5 and 6)

Reference Examples 5 and 6 are examples where the amount of Ti to be substituted by Ta was increased. Other than this, the production method of the sintered body, the electrode formation method and the evaluation method were conducted in the same methods as in Example 12. The results obtained are shown in Table 2.

In Reference Examples 5 and 6, the sintered body is prone to break, and although a sample where evaluation is possible is obtained, many sites that cannot be used are present, and there is a problem on production costs. The number of sites that break was large in the sintered body of Reference Example 6 as compared with the sintered body of Reference Example 5. A part of Ti is substituted by Ta for the purpose of the formation of semiconductor. It is considered that the reason why resistance is not monotonically decreased with increasing the amount to be substituted is that a different phase is increased.

(Examples 15 and 16)

Example 15 is an example where rare earth element is not used as a semiconductor-forming element and a part of Ti was substituted by Nb, and Example 16 is an example where a part of Ti was substituted by Sb. A sintered body was obtained as following using a separate calcination method.

As Example 15, raw material powders of $BaCO_3$, $TiO_2$ and $Nb_2O_5$ were prepared and then blended in pure water so as to be $Ba(Ti_{0.997}Nb_{0.003})O_3$, followed by mixing in pure water. The resulting mixed raw material powder was calcined in the air at 900°C for 4 hours to prepare an $\alpha$ calcined powder.

As Example 16, raw material powders of $BaCO_3$, $TiO_2$ and $Sb_2O_5$ were prepared and then blended so as to be $Ba(Ti_{0.997}Sb_{0.003})O_3$, followed by mixing in pure water. The resulting mixed raw material powder was calcined in the air at 900°C for 4 hours to prepare an $\alpha$ calcined powder.

The preparation of a $\beta$ calcined powder was conducted in the same manner as in Example 1. The subsequent mixing of the $\alpha$ calcined powder and the $\beta$ calcined powder, forming, sintering, electrode formation and evaluation were conducted in the same method as in Example 1 to obtain a PTC element. The results obtained are shown in Table 2.

In the sintered body of Example 15, the average distance between voids is 5.4 $\mu$m. In the sintered body of Example 16, the average distance between voids is 6.0 $\mu$m. Those average distances between voids are within the range of 1.0 $\mu$m or more and 8.0 $\mu$m or less.

Furthermore, in the sintered body of Example 16, the temperature coefficient of resistivity $\alpha$in is 7.7%/°C and satisfies the target characteristic value. The room temperature resistivity $R_{25}$ is 776 $\Omega\cdot$cm. In the sintered body of Example 16, the temperature coefficient of resistivity $\alpha$in is 6.9%/°C and satisfies the target characteristic value. The room temperature resistivity $R_{25}$ is 531 $\Omega\cdot$cm.

(Examples 17 and 18)

Examples 17 and 18 are examples where the amount a of Ti site in the compositional formula was 1.05 and La of the rare earth element was changed to Y and Nd as semiconductor-forming elements. Other than this, the production method of the sintered body, the electrode formation method and the evaluation method were conducted in the same methods as in Example 8. The results obtained are shown in Table 3.

In the sintered body of Example 17, the average distance between voids is 4.4 $\mu$m, and in the sintered body of Example 16, the average distance between voids is 3.9 $\mu$m. Those average distances between voids are within the range of 1.0 $\mu$m or more and 8.0 $\mu$m or less.

Furthermore, in the sintered body of Example 17, the temperature coefficient of resistivity $\alpha$in is 8.4%/°C and satisfies the target characteristic value. The room temperature resistivity $R_{25}$ is 611 $\Omega\cdot$cm. Similarly, in the sintered body of Example 18, the temperature coefficient of resistivity $\alpha$in is 8.5%/°C and satisfies the target characteristic value. The room temperature resistivity $R_{25}$ is 497 $\Omega\cdot$cm.

(Examples 19 and 20)

Examples 19 and 20 are embodiments where the amount a of T site in the compositional formula is 1.05 and K or Li, not Na, was used as the element A. PTC material was obtained as follows using a separate calcination method.

The sintered body was prepared in the same manner as in Example 9, except that $K_2CO_3$ or $Li_2O_3$ was used as the raw material of the element A in place of $Na_2CO_3$. The formation method of the electrode and the evaluation method were conducted in the same methods as in Example 1. The results obtained are shown in Table 4.

In the sintered body of Example 19, the average distance between voids is 3.4 $\mu$m, and in the sintered body of Example 20, the average distance between voids is 4.9 $\mu$m. Those average distances between voids are within the range of 1.0 $\mu$m or more and 8.0 $\mu$m or less.

Furthermore, in the sintered body of Example 19, the temperature coefficient of resistivity $\alpha$in is 8.2%/°C and satisfies the target characteristic value. The room temperature resistivity $R_{25}$ is 940 $\Omega\cdot$cm. Similarly, in the sintered body of Example 20, the temperature coefficient of resistivity $\alpha$in is 8.0%/°C and satisfies the target characteristic value. The room temperature resistivity $R_{25}$ is 638 $\Omega\cdot$cm.

[Table 2]

| | x | y | a | Sintering temperature (°C) | Average distance between voids (μm) | Curie temperature (°C) | Room temperature resistivity $R_{25}$ (Ω·cm) | Temperature coefficient of resistivity αin (%/°C) |
|---|---|---|---|---|---|---|---|---|
| Example 12 | 0.09 | 0.009(Ta) | 1.00 | 1400 | 4.5 | 149 | 867 | 7.8 |
| Example 13 | 0.09 | 0.006(Ta) | 1.00 | 1400 | 4.2 | 153 | 455 | 8.1 |
| Example 14 | 0.09 | 0.003 (Ta) | 1.00 | 1400 | 4.3 | 164 | 668 | 9.1 |
| Reference Example 5 | 0.09 | 0.011 (Ta) | 1.00 | 1400 | 4.3 | 147 | 1242 | 8.2 |
| Reference Example 6 | 0.09 | 0.014(Ta) | 1.00 | 1400 | 6.6 | 144 | 1535 | 4.7 |
| Example 15 | 0.09 | 0.003(Nb) | 1.00 | 1400 | 5.4 | 162 | 776 | 7.7 |
| Example 16 | 0.09 | 0.003(Sb) | 1.00 | 1400 | 6.0 | 147 | 531 | 6.9 |

[Table 3]

| | x | y | a | Sintering temperature (°C) | Average distance between voids (μm) | Curie temperature (°C) | Room temperature resistivity $R_{25}$ (Ω·cm) | Temperature coefficient of resistivity $\alpha$ in (%/°C) |
|---|---|---|---|---|---|---|---|---|
| Example 17 | 0.09 | 0.006(Y) | 1.05 | 1400 | 4.4 | 161 | 611 | 8.4 |
| Example 18 | 0.09 | 0.006(Nd) | 1.05 | 1400 | 3.9 | 163 | 497 | 8.5 |

[Table 4]

| | x | y | a | Sintering temperature (°C) | Average distance between voids (μm) | Curie temperature (°C) | Room temperature ' resistiviy $R_{25}$ (Ω·cm) | Temperature coefficient of resistivity αin (%/°C) |
|---|---|---|---|---|---|---|---|---|
| Example 19 | 0.09(K) | 0.006 | 1.05 | 1400 | 3.4 | 157 | 940 | 8.2 |
| Example 20 | 0.09(Li) | 0.006 | 1.05 | 1400 | 4.9 | 163 | 638 | 8.0 |

Fig. 1 is a view where a semiconductor ceramic composition of the compositional formula defined in the present invention was separately prepared and the relationship between the average distance between voids of the semiconductor ceramic composition and the internal temperature coefficient of resistivity αin of the sintered body was summarized, and Fig. 2 is a view where the relationship between the density of the semiconductor ceramic composition (sintered body) and the temperature coefficient of resistivity αin thereof was summarized.

As shown in Fig. 2, there is less correlations between the density and the temperature coefficient of resistivity αin, but as shown in Fig. 1, high correlation is seen between the average distance between voids and the temperature coefficient of resistivity αin. It is understood from this fact that when the average distance between voids is 8.0 μm pr less, high temperature coefficient of resistivity αin is obtained.

(Example 21)

Example 21 is an example where two kinds of La and Y were used as the rare earth element.

The following sintered body was obtained as follows using a separate calcination method. Raw material powders of $BaCO_3$, $TiO_2$ and $La_2O_3$ were prepared and then blended so as to be $(Ba_{0.994}La_{0.006})TiO_3$, followed by mixing in pure water. The resulting mixed raw material powder was calcined in the air at 900°C for 4 hours to prepare an α calcined powder.

Raw material powders of $Na_2CO_3$, $Bi_2O_3$ and $TiO_2$ were prepared and then weighed and blended so as to be $Bi_{0.5}Na_{0.5}TiO_3$, followed by mixing in ethanol. The resulting mixed raw material powder was calcined in the air at 800°C for 2 hours to prepare a β calcined powder.

The prepared α calcined powder and β calcined powder were blended so that the molar ratio became 73:7. Mixing and pulverization were performed by a pot mill using pure water as a medium until the average particle diameter of the mixed calcined powder became from 1.0μm to 2.0 μm, followed by drying. The resulting mixed powder was subjected to heat treatment at 1,150°C for 4 hours to obtain an α-β calcined powder. $Y_2O_3$ was further added in an amount of 10 mol% to the obtained calcined powder, and mixing and pulverization of the obtained calcined powder were performed by a pot mill using pure water as a medium until the average particle diameter of the mixed calcined powder became from 1.0μm to 2.0 μm, followed by drying. PVA was added in an amount of 10 mass% to the pulverized powder of the mixed calcined powder and, after mixing, the resulting powder was granulated by means of a granulating apparatus. The resulting granulated powder was formed on a monoaxial pressing apparatus to make a formed body. After subjected to binder removal at 700°C, the formed body is kept in a nitrogen atmosphere having an oxygen concentration of 0.01% (100 ppm) at 1,400°C for 4 hours and then gradually cooled to obtain a sintered body having a size of 50 mm × 25 mm × 4 mm. Using the sintered body, the formation method of the electrode and the evaluation method were conducted in the same methods as in Example 1 to obtain an element.

Moreover, the electrification test was conducted by installing the obtained element on a heater fitted with an aluminum fin and applying a voltage of 13V for 500 hours while cooling at a wind velocity of 4 m/sec. The room temperature resistivity at 25°C after the electrification test was measured and a difference between the room temperature resistivity before the electrification test and the room temperature resistivity after the electrification test for 500 hours was divided by the room temperature resistivity before the electrification test to determine a rate of change in resistivity (%), thereby change with time being investigated. The rate of change with time is defined by the following equation.

$$\{(\text{Room temperature resistivity after electrification for 500 hours})-(\text{room temperature resistivity before electrification})\}/(\text{room temperature resistivity before electrification})\} \times 100 \ (\%)$$

The results obtained are shown in Table 5.

In the sintered body of Example 21, the average distance between voids is 3.5 μm and is within the range of 1.0 μm or more and 8.0 μm or less.

Furthermore, in the sintered body of Example 21, the temperature coefficient of resistivity αin is 5.7%/°C and satisfies the target characteristic value. The room temperature resistivity $R_{25}$ is 43 Ω·cm.

The change with time by the electrification for 500 hours is 8.8%, and is suppressed to the level of 10% or less that can withstand the actual use.

(Examples 22 and 23)

Examples 22 and 23 are examples where two kinds of La and Y were used as the rare earth element and the amount of Y was larger than that of Example 21. In Example 22, La was added so as to be y=0.006 and Y was added so as to be y=0.030. In Example 23, La was added so as to be y=0.006 and Y was added so as to be y=0.040. Other than this, the production method of the sintered body, the electrode formation method and the evaluation method were conducted in the same methods as in Example 21. The results obtained are shown in Table 5.

In the sintered body of Example 22, the average distance between voids is 4.1 $\mu$m, and in the sintered body of Example 23, the average distance between voids is 4.5 $\mu$m. Those average distances between voids are within the range of 1.0 $\mu$m or more and 8.0 $\mu$m or less.

Furthermore, in the sintered body of Example 22, the temperature coefficient of resistivity $\alpha$in is 5.5%/°C and satisfies the target characteristic value. The room temperature resistivity $R_{25}$ is 29 $\Omega$·cm. Similarly, in the sintered body of Example 23, the temperature coefficient of resistivity $\alpha$in is 5.0%/°C and satisfies the target characteristic value. The room temperature resistivity $R_{25}$ is 20 $\Omega$·cm.

Regarding the change with time after the electrification for 500 hours, Example 22 is 2.1 %, and Example 23 is 0.1 %. Those were suppressed to the level of 10% or less that can withstand the actual use.

(Examples 24 to 26)

Examples 24 to 26 are examples where two kinds of La and Y were used as the rare earth element and the amount a of Ti site in the compositional formula was changed. La was added so as to be y=0.006 and Y was added so as to y=0.030. The control of the amount of Ti was performed by adding $Ba_6Ti_{17}O_{40}$ in the same step of adding $Y_2O_3$. Other than this, the production method of the sintered body, the electrode formation method and the evaluation method were conducted in the same methods as in Example 22. The results obtained are shown in Table 5.

In the sintered body of Example 24, the average distance between voids is 5.3 $\mu$m; in the sintered body of Example 25, the average distance between voids is 6.6 $\mu$m; and in the sintered body of Example 26, the average distance between voids is 6.9 $\mu$m. Those average distances between voids are within the range of 1.0 $\mu$m or more and 8.0 $\mu$m or less.

Furthermore, in the sintered body of Example 24, the temperature coefficient of resistivity $\alpha$in is 5.3%/°C and satisfies the target characteristic value. The room temperature resistivity $R_{25}$ is 33 $\Omega$·cm. In the sintered body of Example 25, the temperature coefficient of resistivity $\alpha$in is 5.1%/°C and satisfies the target characteristic value. The room temperature resistivity $R_{25}$ is 41 $\Omega$·cm. In the sintered body of Example 26, the temperature coefficient of resistivity $\alpha$in is 5.4%/°C and satisfies the target characteristic value. The room temperature resistivity $R_{25}$ is 74 $\Omega$·cm.

Regarding the change with time after the electrification for 500 hours, Example 24 is 3.2%, Example 25 is 1.7%, and Example 26 is 2.5%. Those were suppressed to the level of 10% or less that can withstand the actual use.

(Table 5)

| | x | y | a | Sintering temperature (°C) | Average distance between voids (μm) | Curie temperature (°C) | Room temperature resistivity $R_{25}$ (Ω·cm) | Temperature coefficient of resistivity $\alpha$ in (%/°C) | Change with time (%/500 hours) |
|---|---|---|---|---|---|---|---|---|---|
| Example 21 | 0.09 | 0.026(La+Y) | 1.00 | 1420 | 3.5 | 151 | 43 | 5.7 | 8.8 |
| Example 22 | 0.09 | 0.036(La+Y) | 1.00 | 1420 | 4.1 | 159 | 29 | 5.5 | 2.1 |
| Example 23 | 0.09 | 0.046(La+Y) | 1.00 | 1420 | 4.5 | 164 | 20 | 5.0 | 0.1 |
| Example 24 | 0.09 | 0.036(La+Y) | 1.03 | 1420 | 5.3 | 158 | 33 | 5.3 | 3.2 |
| Example 25 | 0.09 | 0.036(La+Y) | 1.06 | 1420 | 6.6 | 160 | 41 | 5.1 | 1.7 |
| Example 26 | 0.09 | 0.036(La+Y) | 1.09 | 1420 | 6.9 | 159 | 74 | 5.4 | 2.5 |

(Examples 27 to 30)

Examples 27 to 30 are examples where the sintered body of Example 24 was heat-treated in the air at a temperature of from 800 to 1,100°C to produce a sintered body having high room temperature resistivity ($R_{25}$ is from 192 to 3,861 Ω·cm). The temperature-lowering rate of the heat treatment was 300°C/hour, and the hold time at the maximum temperature was 1 hour.

The production method of the sintered body, the electrode formation method and the evaluation method were conducted in the same methods as in Example 24, except that the heat treatment was conducted. The results obtained are shown in Table 6. In the sintered bodies of Examples 27 to 30, each average distance between voids is within the range of 1.0 μm or more and 8.0 μm or less. It is understood that the temperature coefficient of resistivity αin satisfies the target characteristic value, and the change with time after the electrification was suppressed to the level of 10% or less that is no problem on practical use.

[Table 6]

| | x | y | a | Sintering temperature (°C) | Heat treatment temperature (°C) | Average distance between voids ($\mu$m) | Curie temperature (°C) | Room temperature resistivity $R_{25}$ ($\Omega \cdot$cm) | Temperature coefficient of resistivity $\alpha$in (%/°C) | Change with time (%/500 hours) |
|---|---|---|---|---|---|---|---|---|---|---|
| Example 27 | 0.09 | 0.036(La+Y) | 1.03 | 1420 | 800 | 5.4 | 164 | 192 | 5.6 | 8.7 |
| Example 28 | 0.09 | 0.036(La+Y) | 1.03 | 1420 | 900 | 5.3 | 164 | 330 | 5.3 | 9.1 |
| Example 29 | 0.09 | 0.036(La+Y) | 1.03 | 1420 | 1000 | 5.6 | 167 | 1130 | 5.1 | 8.6 |
| Example 30 | 0.09 | 0.036(La+Y) | 1.03 | 1420 | 1100 | 5.4 | 168 | 3861 | 5.0 | 5.8 |

(Heat generating module)

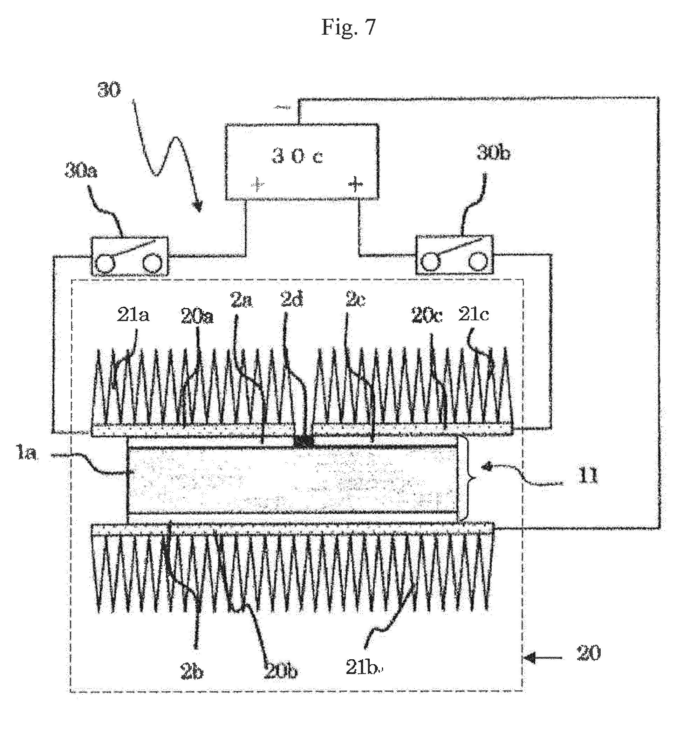

Fig. 7 is a schematic view of the heat generating module according to one embodiment of the present invention. The PTC element described above is sandwiched and fixed between metal-made heat radiating fins 21 a, 21b and 2 1 c as shown in Fig. 7, thereby a heat generating module 20 can be configured. The PTC element is composed of a sintered body 1a and electrodes 2a, 2b and 2c, the electrodes 2a and 2c are thermally and electrically closely attached to power supplying electrodes 20a and 20c at positive side, respectively, and the electrode 2b formed on another face is thermally and electrically closely attached to a power supplying electrode 20b at negative side.

Moreover, the power supplying electrodes 20a, 20b and 20c are thermally connected to the heat radiating fins 21a, 21b and 21c, respectively. Incidentally, an insulating layer 2d is provided between the power supplying electrode 20a and the power supplying electrode 20c to electrically insulate both from each other. Heat generated at the PTC element is transmitted to the electrodes 2a, 2b and 2c, the power supplying electrodes 20a, 20b and 20c and the heat radiating fins 21 a, 2 1 b and 21 c in the order and is mainly radiated from the heat radiating fins 21 a, 21b and 21 c into the atmosphere.

In the case where a power source 30c is connected between the power supplying electrode 20a and the power supplying electrode 20b or between the power supplying electrode 20c and the power supplying electrode 20b, power consumption becomes small, and in the case where the source is connected between both of the power supplying electrodes 20a and 20c and the power supplying electrode 20b, the power consumption becomes large. That is, it is possible to change the power consumption in two stages. Thus, the heat generating module 20 can switch heating capacity depending on load situation of the power source 30c and the desired degree of requirement for rapid or slow heating.

By connecting the heat generating module 20 capable switching the heating capacity to the power source 30c, a heating apparatus 30 can be configured. Incidentally, the power source 30c is a direct-current power source. The power supplying electrode 20a and the power supplying electrode 20c of the heat generating module 20 are connected in parallel to one of the electrodes of the power source 30c through separate switches 30a and 30b and the power supplying electrode 20b is connected as a common terminal to the other electrode for the power source 30c.

In the case where either of the switches 30a or 30b is only put on, the heating capacity is small and the load on the power source 30c can be lightened. When both are put on, the heating capacity can be enlarged.

According to the heating apparatus 30, the PTC element can be maintained at a constant temperature without equipping the power source 30c with a particular mechanism. That is, when a sintered body 1a having large temperature coefficient of resistivity is heated to around the Curie temperature, the resistance value of the sintered body 1a sharply increases and the flow of current through the PTC element 11 decreases, so that the material is no more heated automatically. Moreover, when the temperature of the PTC element 11 lowers from the Curie temperature, the current is again allowed to flow through the element and the PTC element 11 is heated. Since the temperature of the PTC element 11 and also the whole heat generating module 20 can be made constant through repetition of such a cycle, a circuit for regulating the phase and width of the power source 30c and also a temperature detecting mechanism or a mechanism for comparison with a target temperature, a circuit for regulating power for heating, and the like are also unnecessary.

The heating apparatus 30 can heat air with introducing air between the heat radiating fins 21a to 21c or can heat a liquid such as water with connecting a metal tube for liquid flow between the heat radiating fins 21a to 21c. On this occasion, since the PTC element 11 is also kept at a constant temperature, a safe heating apparatus 30 can be configured.

While the invention has been described in detail with reference to specific embodiments thereof, it will be apparent to one skilled in the art that various changes and modifications can be made therein without departing from the spirit and scope thereof.

Incidentally, the present application is based on Japanese Patent Application No. 2011-219093 filed on October 3, 2011, and the contents are incorporated herein by reference.

INDUSTRIAL APPLICABILITY

According to the present invention, the semiconductor ceramic composition having the internal temperature coefficient of resistivity $\alpha$in as high as 4%/°C or more in the perovskite type semiconductor ceramic composition can be provided. Even in the case of preparing a PTC element having a thickness between electrodes of 100 $\mu$m or more using the semiconductor ceramic composition, variation in adhesion between the electrode and the semiconductor ceramic composition does not occur, and the PTC element having high reliability and the heat generating module using the same can be obtained.

**Claims**

1. A semiconductor ceramic composition which is represented by a composition formula of $[(Bi \cdot A)_x (Ba_{1-y}R_y)_{1-x}](Ti_{1-z}M_z)_a O_3$ (wherein A is at least one kind of Na, Li and K, R is at least one kind of rare earth elements (including Y), and M is at least one kind of Nb, Ta and Sb), wherein a, x, y and z satisfy $0.90 \leq a \leq 1.10$, $0 < x \leq 0.30$, $0 \leq y \leq 0.050$ and $0 \leq z \leq 0.010$, and an average distance between voids, which is an average value of a space between voids being internally present, is 1.0 $\mu$m or more and 8.0 $\mu$m or less.

2. The semiconductor ceramic composition according to claim 1, wherein R contains Y and at least one kind of rare earth elements other than Y, and which satisfies $0.010 \leq y \leq 0.050$.

3. A PTC element comprising the semiconductor ceramic composition according to claim 1 or 2 and provided thereon at least a pair of electrodes.

4. A heat generating module comprising the PTC element according to claim 3.

Fig. 1

EP 2 765 122 A1

Fig. 2

Fig. 3

Fig. 4

Fig. 5

Fig. 6

Fig. 7

Fig. 8

(a)  X        Electrode      Semiconductor Ceramic Composition      X

(b)

EP 2 765 122 A1

Fig. 9

Electrode    Semiconductor Ceramic Composition

(a)    Y

(b)    E

d

c

W

EP 2 765 122 A1

<div align="center">

**INTERNATIONAL SEARCH REPORT**

</div>

| International application No. |
| --- |
| PCT/JP2012/075235 |

A. CLASSIFICATION OF SUBJECT MATTER
*C04B35/468*(2006.01)i, *H01C7/02*(2006.01)i

According to International Patent Classification (IPC) or to both national classification and IPC

B. FIELDS SEARCHED

Minimum documentation searched (classification system followed by classification symbols)
C04B35/468, H01C7/02

Documentation searched other than minimum documentation to the extent that such documents are included in the fields searched
Jitsuyo Shinan Koho          1922-1996     Jitsuyo Shinan Toroku Koho     1996-2012
Kokai Jitsuyo Shinan Koho     1971-2012     Toroku Jitsuyo Shinan Koho     1994-2012

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | WO 2006/118274 A1  (Neomax Co., Ltd.),<br>09 November 2006 (09.11.2006),<br>claims 13, 14; paragraphs [0001], [0067],<br>[0068], [0075] to [0077]; table 6, sample no.<br>33<br>& US 2008/0170977 A1     & US 2010/0075825 A1<br>& US 7704906 B2          & EP 1876157 A1<br>& KR 10-2008-0012855 A   & CN 101213155 A<br>& KR 10-2012-0037016 A | 1-4 |

☐ Further documents are listed in the continuation of Box C.          ☐ See patent family annex.

| | |
| --- | --- |
| \*      Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |
| Date of the actual completion of the international search<br>11 October, 2012 (11.10.12) | Date of mailing of the international search report<br>23 October, 2012 (23.10.12) |
| Name and mailing address of the ISA/<br>Japanese Patent Office | Authorized officer |
| Facsimile No. | Telephone No. |

Form PCT/ISA/210 (second sheet) (July 2009)

**REFERENCES CITED IN THE DESCRIPTION**

**Patent documents cited in the description**

- WO 2006118274 A
- WO 2011126040 A
- JP H6302403 A
- JP 2011219093 A